# EUROPÄISCHE PATENTSCHRIFT

(11) **EP 2 370 308 B1**
(45) Veröffentlichungstag und Bekanntmachung des Hinweises auf die Patenterteilung: **29.05.2013**
(21) Anmeldenummer: 09771651.8
(22) Anmeldetag: 09.11.2009
(51) Int. Cl.: B62D 53/08, B60D 1/06

(54) **SATTELKUPPLUNG**
FIFTH WHEEL COUPLING
SELLETTE D'ATTELAGE

(30) Priorität: 28.11.2008 AT 18612008
(43) Veröffentlichungstag der Anmeldung: 05.10.2011
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte OG
(86) Internationale Anmeldenummer: PCT/AT2009/000426
(87) Internationale Veröffentlichungsnummer: WO 2010/060125

(56) Entgegenhaltungen:
- DE-U1- 20 018 903
- GB-A- 2 175 262
- US-A- 2 120 415
- US-A- 2 168 101
- US-A- 3 909 033
- US-A1- 2006 255 559

## Beschreibung

Die Erfindung betrifft eine Sattelkupplung gemäß dem Oberbegriff des Patentanspruches 1. Sattelkupplungen - sofern an Sattelzugmaschine bzw. am Sattelanhänger montiert - sind Teil eines Sattelzuges, Sattelzüge sind Transportfahrzeuge, welche flexibel und kostengünstig einsetzbar sind.

Der Sattelzug umfasst die Sattelzugmaschine und den angekuppelten Sattelanhänger. Der Sattelzug kann auch als Gespann bezeichnet werden. Die Sattelzugmaschine kann auch als Sattelkraftfahrzeug bezeichnet werden. Der Sattelanhänger ist ein Anhänger ohne Vorderachse, üblicherweise jedoch mit mehreren Hinterachsen. Der Sattelanhänger ist auch unter den Bezeichnungen Sattelauflieger, Auflieger bzw. Trailer bekannt. Die Sattelkupplung ist dabei - in Fahrtrichtung des Gespanns gesehen - vor der hintersten Achse der Sattelzugmaschine angeordnet. Derart kann die Sattelzugmaschine einen teil der Masse des Anhängers tragen.

Aus der GB 2 175 262 A ist eine Sattelkupplung bekannt, welche zur Kupplung einer Sattelzugnaschine mit einem Sattelanhänger geeignet ist.

Auch aus der US 3 909 033 A ist eine Sattelkupplung bekannt, bei der das Eingriffselement eine Kupplungskugel ist.

Aus der US 2 120 415 A ist eine Kupplungsvorrichtung mit einer Kupplungskugel bekannt, wobei die Kupplungskugel am Anhänger und nach unten montiert ist.

Aus der US 2 168 101 A ist eine Sattelkupplung bekannt, bei der das Eingriffselement eine Kupplungskugel ist und der Niederhalter manuell mittels Stiften fixiert wird.

Aus der DE 200 18 903 U1 ist eine Sattelkupplung bekannt, bei der das Eingriffselement eine Kupplungskugel ist.

Aus der US 2006/255559 A1 ist eine Sattelkupplung für einen Kupplungszapfen bekannt. Nachteilig bei herkömmlichen Sattelzügen ist, dass diese eine geringe Geländegängigkeit aufweisen, also auf unebenem Gelände schnell an deren Einsatzgrenzen stoßen.

Aufgabe der Erfindung ist es eine Sattelkupplung der eingangs genannten Art anzugeben, welche eine hohe Geländegängigkeit eines Sattelzuges ermöglicht.

Erfindungsgemäß wird dies durch die Merkmale des Patentanspruches 1 erreicht.

Durch die Kupplungskugel ergibt sich der Vorteil, dass Sattelanhänger und Sattelzugmaschine sowohl um zumindest eine vertikale Achse als auch um zumindest eine horizontale Achse relativ zueinander verdrehbar miteinander verbunden sind, womit von der Sattelkupplung ein Kugelgelenk ausgebildet ist. Dadurch ergibt sich der Vorteil, dass der Sattelzug auch auf unebenem Gelände fahren kann und auch auf unebenem Gelände eine sichere Kupplung von Sattelzugmaschine und Sattelanhänger gewährleistet sein kann.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 die Sattelkupplung einer bevorzugten ersten Ausführungsform in einer Draufsicht;
Fig. 2 die Sattelkupplung gemäß Fig. 1 in einer Schrägsicht;
Fig. 3 die Sattelkupplung gemäß Fig. 1 in schematischer Frontsicht in einer ersten, gekuppelten und fixierten Stellung;
Fig. 4 die Sattelkupplung gemäß Fig. 1 geschnitten in schematischer Seitenansicht in der Stellung gemäß Fig. 3;
Fig. 5 die Sattelkupplung gemäß Fig. 1 in schematischer Frontsicht in einer zweiten, gekuppelten und gelösten Stellung;
Fig. 6 die Sattelkupplung gemäß Fig. 1 geschnitten in schematischer Seitenansicht in der Stellung gemäß Fig. 5;
Fig. 7 die Sattelkupplung gemäß Fig. 1 in schematischer Frontsicht in einer dritten, entkuppelten Stellung;
Fig. 8 die Sattelkupplung gemäß Fig. 1 geschnitten in schematischer Seitenansicht in der Stellung gemäß Fig. 7;
Fig. 9 ein Detail einer Sattelkupplung gemäß Fig. 1 in Draufsicht, wobei im Detail eine, einen Handhebel umfassende, Betätigungseinrichtung dargestellt ist, wobei die Sattelkupplung in der ersten, gekuppelten und fixierten Stellung und die Betätigungseinrichtung in dessen Fixierstellung angeordnet sind;
Fig. 10 das Detail gemäß Fig. 9, wobei die Sattelkupplung in der zweiten, gekuppelten und gelösten Stellung und die Betätigungseinrichtung in einer Lösestellung angeordnet sind;
Fig. 11 das Detail gemäß Fig. 9, wobei die Sattelkupplung in der dritten, entkuppelten Stellung und die Betätigungseinrichtung in einer Bereitschaftsstellung angeordnet sind;
Fig. 12 das Eingriffselement gemäß Fig. 1 in einer Schrägansicht;
Fig. 13 die Sattelplatte gemäß Fig. 1 in einer Schrägansicht;
Fig. 14 die in Fig. 13 dargestellte Sattelplatte in der Draufsicht; und
Fig. 15 die in Fig. 13 dargestellte Sattelplatte in der Seitenansicht.

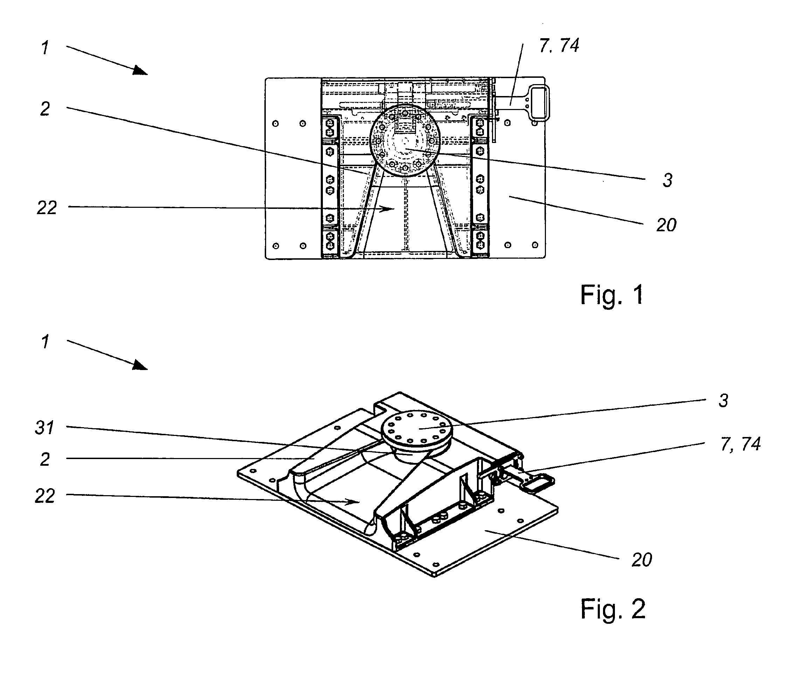

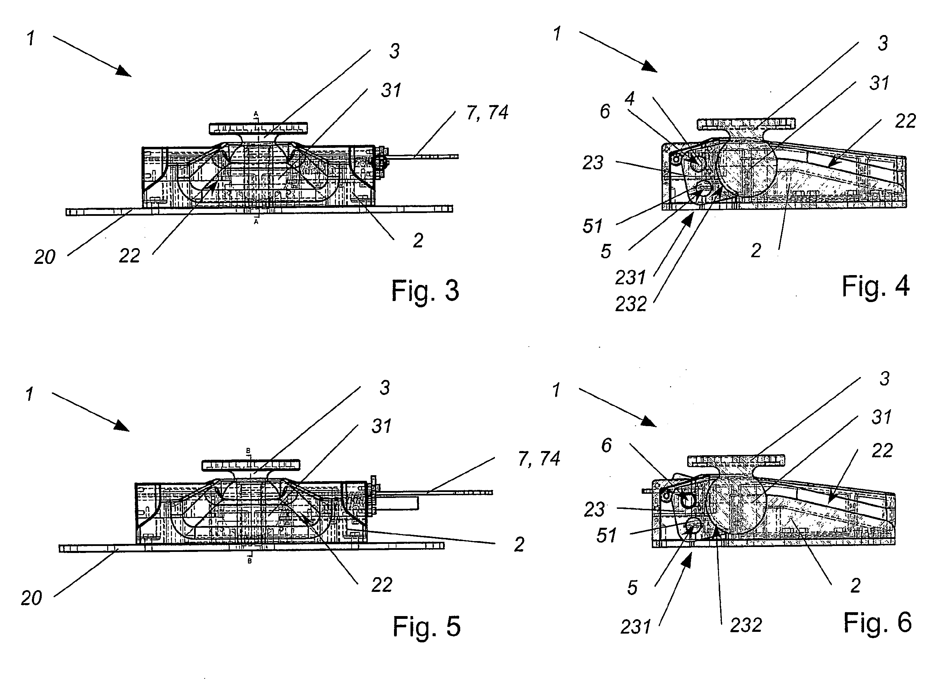

Die Fig. 1 bis 15 zeigen wenigstens Teile oder Details einer bevorzugten ersten Ausführungsform einer Sattelkupplung 1 zur Kupplung einer Sattelzugmaschine mit einem Sattelanhänger, mit einer Sattelplatte 2 zur Montage auf der Sattelzugmaschine und einem Eingriffselement 3 zur Montage auf dem Sattelanhänger, wobei die Sattelplatte 2 zur wenigstens bereichsweisen Aufnahme des Eingriffselementes 3 ausgebildet ist. Bei der Sattelkupplung ist zur Verbesserung der Geländegängigkeit eines aus der Sattelzugmaschine und dem Sattelanhänger gebildeten Sattelzuges vorgesehen, dass das Eingriffselement 3 eine Kupplungskugel 31 umfasst.

Dies ermöglicht die eingangs genannten Vorteile und vorteilhaften Wirkungen. Vorteilhaft dabei ist, dass Sattelzugmaschine und angekuppelter Sattelanhänger vorbestimmbar relativ zueinander sowohl verdrehen, als auch vorbestimmbar relativ zueinander verkippen können. Vorteilhaft dabei ist, dass bei einer vorbestimmbaren Relativverkippung, also einer Verdrehung um eine Horizontalachse relativ zueinander, beispielsweise um 10° zwischen Sattelzugmaschine und Sattelanhänger, Sattelzugmaschine und Sattelanhänger weiterhin zueinander - wie herkömmlich - relativ zueinander verdreht werden können. Vorteilhaft dabei ist insbesondere, dass dabei keine übermäßigen Belastungen an und/oder in der Sattelkupplung 1 auftreten, womit auch die Standfestigkeit der Sattelkupplung 1 erhöht werden kann.

Mittels der Sattelkupplung können Kräfte, insbesondere Zug- und Seitenführungskräfte, zuverlässig vom Sattelanhänger an die Sattelzugmaschine - und in die umgekehrte Wirkrichtung - übertragen werden.

Die Sattelplatte 2 wird an der Sattelzugmaschine montiert und kann dazu insbesondere mittels einer von der Sattelplatte 2 umfassten Trägerplatte 20 an der Sattelzugmaschine befestigt, insbesondere angeschraubt, werden.

Das Eingriffselement 3 wird an den Sattelanhänger montiert und kann dazu insbesondere an den Sattelanhänger angeschraubt werden.

Sattelplatte 2 und/oder Eingriffselement 3 können Stahl umfassen oder im Wesentlichen aus Stahl ausgebildet sein.

Weiterhin weist die Sattelplatte 2 eine Kugelpfanne 21 auf.

Die Kugelpfanne 21 kann dabei im Wesentlichen in deren Formgebung gegengleich zur Kupplungskugel 31 ausgebildet sein, womit die Kupplungskugel 31 zuverlässig von der Kugelpfanne 21 aufgenommen werden kann und die Kupplungskugel 31 zuverlässig in der Kugelpfanne 21 in sämtliche Richtungen verdreht werden kann, womit das in die Kugelpfanne 21 eingreifende Eingriffselement 3 rotiert und verkippt werden kann. Vorteilhaft dabei ist, dass dabei in jeder dieser eingreifenden Stellungen des Eingriffselementes 3 zuverlässig Kräfte von der Sattelzugmaschine zum Sattelanhänger - und umgekehrt - übertragen werden können.

Vorteilhafterweise kann hiezu vorgesehen sein, dass die Kugelpfanne 21 im Wesentlichen halbkugelförmig ausgebildet ist. Die Kugelpfanne 21 bildet dabei eine halbkugelförmige Innenfläche zur Aufnahme der kugelförmigen Außenfläche der Kupplungskugel 31 aus.

Die Kupplung zwischen Sattelzugmaschine und Sattelanhänger kann besonders zuverlässig gewährleistet werden, wenn die Kugelpfanne 21 einen an den halbkugelförmigen Bereich 211 anschließenden zylindrischen Bereich 212 aufweist, wie dies bei der bevorzugten ersten Ausführungsform der Sattelkupplung 1 vorgesehen ist.

In vorteilhafter Weiterbildung kann vorgesehen sein, dass angrenzend an die Kugelpfanne 21 eine Gleitführung 22 zur Führung der Kupplungskugel 31 zu der Kugelpfanne 21 angeordnet ist, wie dies bei der bevorzugten ersten Ausführungsform der Sattelkupplung 1 vorgesehen ist. Derart kann das Hinzuführen der Kupplungskugel 31 in die Kugelpfanne 21 vereinfacht werden. Zum Kuppeln kann die Sattelzugmaschine rückwärts in Richtung des dabei stehenden Sattelanhängers geschoben werden. Dabei kann die Kupplungskugel 31 einfach in die randseitig breite und schmäler zulaufende Gleitführung 22 eingeführt werden. Mittels der Gleitführung 22 kann - beim weiteren Rückwärtsschieben der Sattelzugmaschine - die Kupplungskugel 31 weiter - im Wesentlichen selbsttätig - in Richtung der Kugelpfanne 21 geschoben werden.

Weiterhin es ist vorgesehen dass die Sattelplatte 2 ein Niederhalterelement 23 umfasst, dass das Niederhalterelement 23 von einer Freigabestellung 230 in eine Haltestellung 231 bewegbar ist, insbesondere schwenkbar ist, und dass das Niederhalterelement 23 einen Kontaktbereich 232 zum Kontaktieren einer in der Haltestellung 231 in der Kugelpfanne 21 angeordneten Kupplungskugel 31 umfasst, wie dies bei der bevorzugten ersten Ausführungsform der Sattelkupplung 1 vorgesehen ist. Das Niederhalterelement 23 ist dabei zur Sicherung der Kupplungskugel 31 einer gekuppelten Stellung des Eingriffselementes 3 vorgesehen. Das Niederhalterelement 23 und die Kugelpfanne 21 sind von der Sattelplatte 2 umfasst, womit das Niederhalterelement 23 und die Kugelpfanne 21 zur Montage an der Sattelzugmaschine vorgesehen sind und in Betriebsstellung an der Sattelzugmaschine montiert sind.

Die derart fixierte Kupplungskugel 31 kann jedoch weiterhin in der Kugelpfanne 21 verdrehen - insbesondere im Wesentlichen in sämtlich mögliche Richtungen verdrehen. Derart kann weiterhin die Verdrehbarkeit und die Neigbarkeit von Sattelzugmaschine zum Sattelanhänger gewährleistet werden. Dabei kann insbesondere vorgesehen sein, das die Kugelpfanne eine Ausnehmung 25 zur Aufnahme eines von der Sattelplatte 2 umfassten Niederhalterelementes 23 aufweist, wobei das Niederhalterelement 23 relativ zur Sattelplatte 2 bewegbar ist, insbesondere innerhalb der Ausnehmung 25 verschoben und/oder verschwenkt werden kann.

In diesem Zusammenhang kann vorgesehen sein, dass das Niederhalterelement 23 um einen - in Seitenansicht des Niederhalterelements 23 gesehen - ersten Lagerpunkt 5 einer ersten Lagerachse drehbar gelagert ist und in der Haltestellung 231 mittels eines Fixierelementes 4 in einem - in Seitenansicht des Niederhalterelements 23 gesehen - zweiten Lagerpunkt 6 einer zweiten Lagerachse fixierbar ist. Derart kann das Niederhalterelement 23 einerseits einfach und andererseits zuverlässig die Kupplungskugel 31 in der gekuppelten Stellung fixieren, wie dies bei der bevorzugten ersten Ausführungsform der Sattelkupplung 1 vorgesehen ist. Bei der ersten Ausführungsform der Sattelkupplung 1 ist hiezu vorgesehen, dass der erste Lagerpunkt 5 durch fluchtende Durchbrüche in Sattelplatte 2 und Niederhalterelement 23 ausgebildet ist. Zur Lagerung wird in diese fluchtenden Durchbrüche ein Bolzen eingesetzt, welcher Bolzen ein Lager ausbildet. Weiters ist bei der ersten Ausführungsform der Sattelkupplung 1 hiezu vorgesehen, dass der zweite Lagerpunkt 6 durch weitere Durchbrüche in Sattelplatte 2 und Niederhalterelement 23 ausgebildet ist, welche weiteren Durchbrüche in der Haltestellung 231 fluchten. Innerhalb der weiteren Durchbrüche ist zur Fixierung des Niederhalterelementes 23 in der Haltestellung 231 das, insbesondere in den weiteren Durchbrüchen längsverschiebbar angeordnete, Fixierelement 4 eingeführt. Insbesondere kann die erste Lagerachse normal auf eine Hauptbewegungsrichtung stehen, entlang welcher Hauptbewegungsrichtung im Wesentlichen die Kupplungskugel 31 innerhalb der Kugelpfanne 21 beim Kuppeln bewegbar ist und welche Hauptbewegungsrichtung insbesondere im Wesentlichen normal auf die Trägerplatte 20, bevorzugt im Wesentlichen vertikal, angeordnet sein kann. Insbesondere kann die erste Lagerachse parallel zur Trägerplatte 20 angeordnet sein, welche Trägerplatte 20 insbesondere im Wesentlichen parallel zu einer horizontalen, also waagerechten, Ebene angeordnet sein kann. Insbesondere kann die erste Lagerachse im Wesentlichen horizontal angeordnet sein. Die erste Lagerachse und die zweite Lagerachse können in vorteilhafter Weise zueinander parallel sein. Das Niederhalterelement 23 kann somit insbesondere in einer zur Hauptbewegungsrichtung parallelen Ebene, bevorzugt in einer vertikalen, also senkrechten, Ebene, schwenken. Die Schwenkbewegung des Niederhalterelements 23, bei welcher das Niederhalterelement 23 um den ersten Lagerpunkt 5 verdreht, und die transversale Bewegung der Kupplungskugel 31 entlang der Hauptbewegungsrichtung können dabei besonders zuverlässig interagieren.

In einer anderen vorteilhaften Ausführungsform, welche nicht dargestellt ist, kann das Niederhalterelement 23 mittels einer Längsführung geführt sein und mittels eines Aktuators an die Kupplungskugel 31 herangeführt bzw. von diesem weggeführt werden. Die Längsführung kann dabei den ersten Lagerpunkt 5 und der Aktuator den zweiten Lagerpunkt 6 ersetzten.

In einer weiteren vorteilhaften Ausführungsform, welche nicht dargestellt ist, kann vorgesehen sein, dass das Niederhalterelement 23 in der Haltestellung 231 mittels einer verschwenkbare Klappe fixiert ist, wozu die Klappe in einer ersten Klappenstellung angeordnet ist. Zum Freigabe der Bewegung des Niederhalterelementes 23 kann die Klappe aus der ersten Klappenstellung verschwenkt werden, welches ferngesteuert oder fernbewirkt erfolgen kann, und anschleißend kann das Niederhalterelement 23 in die Freigabestellung 230 bewegen, insbesondere verschwenken. In der Freigabestellung 230 kann vorgesehen sein, dass die Klappe in einer zweiten Klappenstellung angeordnet ist, in welcher zweiten Klappenstellung bereits ist im Wesentlichen ohne weiteres Zutun in die erste Klappenstellung zurück zu schwenken, sobald das Niederhalterelement 23 wieder in der Haltestellung 231 angeordnet ist. Hiezu kann die Klappe in der zweiten Klappenstellung vorgespannt sein. Insbesondere kann die Klappe ferngesteuert sein.

Insbesondere kann vorgesehen sein, dass der Kontaktbereich 232 des Niederhalterelement 23 im Wesentlichen sichelförmig ausgebildet ist und in der Haltestellung 231 bereichsweise im halbkugelförmigen Bereich der Kugelpfanne 21 angeordnet ist, wie dies bei der bevorzugten ersten Ausführungsform der Sattelkupplung 1 vorgesehen ist. Vorteilhaft dabei ist, dass das Niederhalterelement 23 in der Haltestellung 231 zur Ergänzung der Kontur der Kugelpfanne 21 besonders gut geeignet ist.

Der sichelförmige Kontaktbereich 232 in Kombination mit der geeigneten Position des ersten Lagerpunktes 5 kann dabei in vorteilhafter Weise bewirken, dass beim Absenken des Eingriffselementes 3 zum Kuppeln das Niederhalterelement 23 durch die Kupplungskugel 31 um den ersten Lagerpunkt 5 in die Haltestellung 231 gedreht wird, insbesondere ohne weiteres Zutun gedreht wird. Vorteilafterweise kann derart gewährleistet sein, dass das Niederhalterelement 23 dabei ohne weiters Zutun in die Haltestellung 231 bewegt wird, womit der Vorgang des Kuppelns des Sattelanhängers an die Sattelzugmaschine vereinfacht werden kann.

In Weiterbildung des Kontaktbereichs 232 kann vorgesehen sein, dass lediglich ein Teilbereich sichelförmig ausgebildet ist. Vorteilhaft dabei ist, dass die Geometrie des Kontaktbereichs 232 einfach hergestellt werden kann, wobei dennoch der vorstehende Vorteil
- dass der Vorgang des Kuppelns des Sattelanhängers an die Sattelzugmaschine besonders einfach ausgebildet sein kann - gewährleistet sein kann.
   In vorteilhafter Weiterbildung, insbesondere der ersten Ausführungsform der Sattelkupplung 1, kann vorgesehen sein, dass im Bereich des ersten Lagerpunktes 5 ein Deformationselement angeordnet ist. Vorteilhaft dabei ist, dass derart - bei der Bewegung des Gespanns auftretende
- Schläge, also Kraftimpulse, vom Deformationselement abgefedert werden können, wobei das Auftreten kurzfristiger übermäßiger Spannungsspitzen in der Sattelkupplung 1 vermieden werden kann. Vorteilhafterweise kann derart die Lebensdauer der Sattelkupplung 1 erhöht werden.

In diesem Zusammenhang kann insbesondere vorgesehen sein, dass das Deformationselement als elastischer Ring ausgebildet ist. Dies ermöglicht die besonders einfache und platzsparende Montage des Deformationselements im Bereich des ersten Lagerpunktes 5.

In besonders vorteilhafter Weise kann - wie in Fig. 1, 2, 3, 5, 7, 9, 10 und 11 dargestellt - eine Betätigungseinrichtung 7 zur Betätigung des Fixierelementes 4 vorgesehen sein, wobei die Betätigungseinrichtung 7 in einer Fixierstellung 71, einer Lösestellung 72 und einer Bereitschaftsstellung 73 anordenbar ist, und dass eine Vornchtung 8 zur Verbringung der Betätigungseinrichtung 7 von der Lösestellung 72 in die Bereitschaftsstellung 73 bei einer Verbringung des Niederhalterelementes 23 von der die Haltestellung 231 in die Freigabestellung 230 vorgesehen ist. In vorteilhafter Weise kann dabei die jeweilige Stellung der Sattelkupplung 1 auch an der - gut sichtbaren - Stellung der Betätigungseinrichtung 7 erkannt werden. Das Fixierelement 4 kann in besonders bevorzugter Weise mit der Betätigungseinrichtung 7 gekoppelt sein und dabei gemeinsam mit der Betätigungseinrichtung 7 relativbewegt werden, insbesondere relativ zum Niederhalterelement 23 verschoben werden. Das Fixierelement 4 kann im Wesentlichen als Bolzen ausgebildet sein, wie dies bei der ersten Ausführungsform der Sattelkupplung 1 der Fall ist.

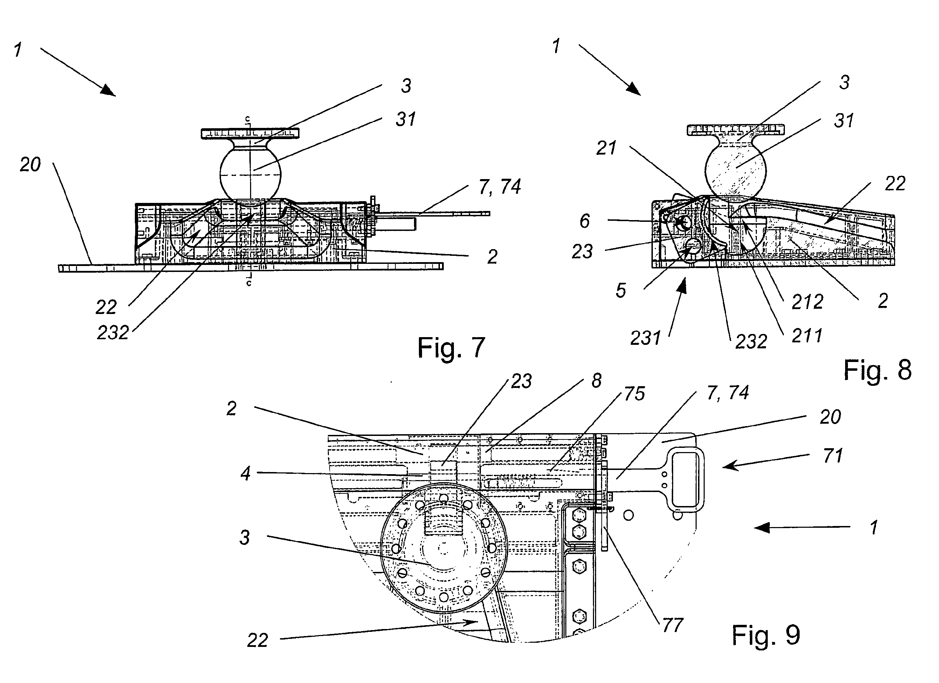

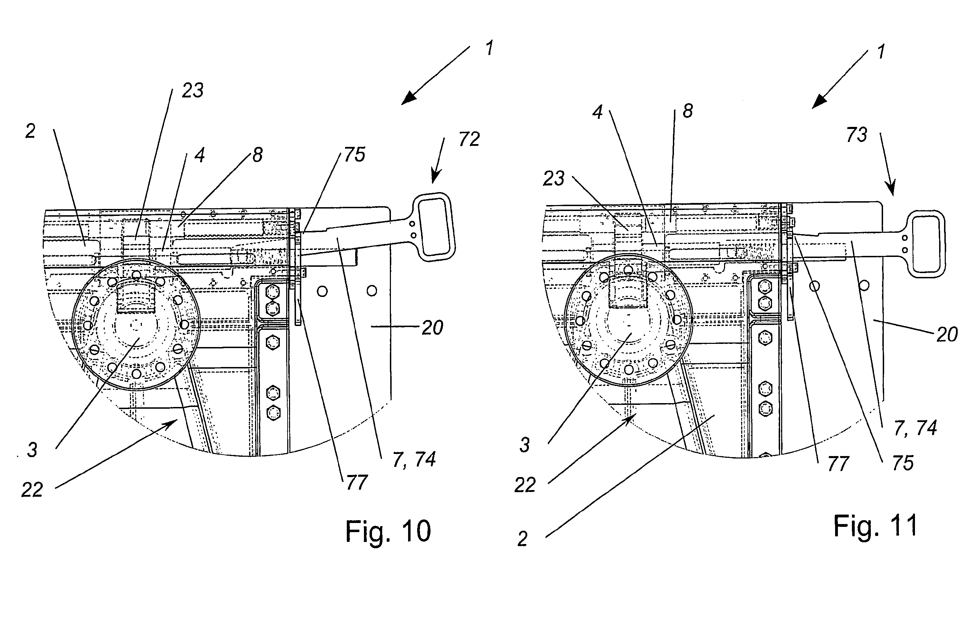

Die Fixierstellung 71 bei der ersten Ausführungsform des Sattelkupplung 1 ist in der Detailansicht in Fig. 9 dargestellt. In der Fixierstellung 71 ist das Niederhalterelement 23 in der Haltestellung 231 angeordnet und das Niederhalterelement 23 ist dabei relativ zum ersten Lagerpunkt 5 verdrehfixiert, wozu das Fixierelementes 4 im zweiten Lagerpunkt 6 mittels der Betätigungseinrichtung 7 fixiert ist. Die Lösestellung 72 ist in der Detailansicht in Fig. 10 dargestellt. In der Lösestellung 72 kann das Niederhalterelement 23 sowohl in der Haltestellung 231, in der Freigabestellung 230 oder in einer Zwischenstellung angeordnet sein und das Niederhalterelement 23 ist dabei um den ersten Lagerpunkt 5 verdrehbar, wozu das Fixierelement 4 mittels der Betätigungseinrichtung 7 beabstandet zum zweiten Lagerpunkt 6 angeordnet ist. Die Betätigungseinrichtung 7 kann insbesondere einen Haken 75 zum Einhaken an der Sattelkupplung 1 umfassen. Die Betätigungseinrichtung 7 kann manuell in die Lösestellung 72 gebracht werden und nach dem Einhaken in der Lösestellung 72 bis zur Lösung des Einhakens in dieser verbleiben.

Um die Betätigungseinrichtung 7 von dessen Fixierstellung 71 in dessen Lösestellung 72 zu führen, kann diese, insbesondere manuell, im Wesentlichen längsverschoben werden, bereichsweise aus der Sattelplatte 2 herausgezogen werden und mittels des Hakens 75 an der Sattelplatte 2 eingehakt werden. Dabei kann insbesondere vorgesehen sein, dass das Fixierelement 4 aus den den zweiten Lagerpunkt 6 ausbildenden Durchbrüchen - wenigstens bereichsweise - herausgezogen wird.

Die Bereitschaftsstellung 73 ist in der Detailansicht in Fig. 11 dargestellt. In der Bereitschaftsstellung 73 kann der Haken 75 von der Sattelkupplung 1 gelöst sein, womit die Betätigungseinrichtung 7 bewegbar, insbesondere längsverschiebbar angeordnet ist. In der Bereitschaftsstellung 73 kann insbesondere vorgesehen sein, dass das Fixierelement 4 an einer Fläche des Niederhalterelementes 23 anliegt und mittels der Betätigungseinrichtung 7 zum Vordringen in die weiteren den zweiten Lagerpunkt 6 ausbildenden Durchbrüche vorgespannt ist. Dabei wird die Position der Betätigungseinrichtung 7 im Wesentlichen dadurch bestimmt, dass das Fixierelement 4 an einer Fläche des Niederhalterelementes 23 anliegt und derart ein Weiterschieben der Betätigungseinrichtung 7 in Richtung Niederhalterelementes 23 verhindert.

In der Bereitschaftsstellung 73 kann das Niederhalterelement 23 sowohl in der Haltestellung 231, in der Freigabestellung 230 oder in einer Zwischenstellung angeordnet sein und das Niederhalterelement 23 ist dabei ebenfalls um den ersten Lagerpunkt 5 verdrehbar. Vorteilhaft dabei ist, dass das Fixierelement 4 dabei - insbesondere ohne weiteres Zutun - in die weiteren Durchbrüche eindringen kann und derart das Niederhalterelement 23 am zweiten Lagerpunkt 6 lagefixieren kann, sobald das Niederhalterelement 23 in dessen Haltestellung 231 angeordnet ist. Vorteilhaft dabei ist, dass derart das Niederhalterelement 23 sicher sowohl am ersten Lagerpunkt 5, als auch am zweiten Lagerpunkt 6 verdrehfest gelagert sein kann, womit das Niederhalterelement 23 zuverlässig in dessen Haltestellung 231 fixiert ist und somit das Niederhalterelement 23 zuverlässig die Kupplungskugel 31 innerhalb der Kugelpfanne 21 fixiert.

Um die Betätigungseinrichtung 7 von dessen Lösestellung 72 in dessen Bereitschaftsstellung 73 zu führen, kann diese aus der an der Sattelplatte 2 eingehakten Lösestellung 72 gelöst werden. In besonders Vorteilhafterweise kann dies geschehen, wenn an dem Niederhalterelement 23 und/oder an der Betätigungseinrichtung 7 Mittel zum Lösen des Hakens 75 von der Sattelkupplung 1 angeordnet sind. Dadurch kann der Haken 75, wenn sich Niederhalterelement 23 und an der Betätigungseinrichtung 7 kontaktieren, ohne weiteres Zutun von der Sattelplatte 2 losgelöst werden und die Betätigungseinrichtung 7 kann sich, insbesondere ohne weiteres Zutun, in der Bereitschaftsstellung 73 anordnen.

In Weiterbildung kann vorgesehen sein, dass die den zweiten Lagerpunkt 6 ausbildenden weiteren Durchbrechungen anstatt lochförmig, wenigstens bereichsweise eckig, insbesondere viereckig, bevorzugt quadratisch, ausgebildet sind. Hiebei kann das Fixierelement 4 ebenso geometrisch dazu passend, also gegengleich, ausgebildet sein und kann aus einem dementsprechenden dreidimensionalen Formteil bestehen.

Bevorzugt kann die Betätigungseinrichtung 7 einen Handhebel 74 umfassen, wie dies bei der ersten Ausführungsform der Sattelkupplung 1 vorgesehen ist. Vorteilhaft dabei ist, dass die Betätigungseinrichtung 7 besonders einfach manuell betätigt werden kann.

Bevorzugt kann vorgesehen sein, dass die Betätigungseinrichtung 7 wenigstens ein Fluidelement, insbesondere einen Hydraulikzylinder und/oder einen Pneumatikzylinder, umfasst. Derart kann die Stellung der Betätigungseinrichtung 7 besonders einfach, beispielsweise aus einer Kabine des Sattelzugfahrzeuges heraus, ferngesteuert werden.

In vorteilhafter Weiterbildung kann an der Sattelkupplung 1 ein Sicherungselement 77 zur Sicherung der Fixierstellung 71 der Betätigungseinrichtung 7 angeordnet sein. Das Sicherungselement 77 kann dabei die Bewegung der Betätigungseinrichtung 7 von der Fixierstellung 71 in die Lösestellung 72 bzw. in die Bereitschaftsstellung 73 blockieren.

In vorteilhafter Weise kann vorgesehen sein, dass das Sicherungselement 77 zum Deblockieren der Betätigungseinrichtung 7 aus einer blockierenden Stellung heraus bewegt, insbesondere verschwenkt, werden muss. Dabei kann das Sicherungselement 77 als Schwenkhebel ausgebildet sein.

In diesem Zusammenhang kann vorgesehen sein, dass wenn die Betätigungseinrichtung 7 von der Bereitschaftsstellung 73 in die Fixierstellung 71 verbracht wird, welches bei geeigneter Stellung des Niederhalterelementes 23 insbesondere ohne weiteres Zutun im Wesentlichen von selbst geschehen kann, dass sich das Sicherungselement 77 ohne weiteres Zutun in eine die Betätigungseinrichtung 7 in der Fixierstellung 71 blockierende Stellung bewegt, insbesondere verschwenkt. Insbesondere kann diese Bewegung, insbesondere dieses Verschwenken, in die blockierende Stellung des Sicherungselementes 77 schwerkraftbedingt erfolgen. In dieser Stellung kann das Sicherungselementes 77 wiederum mittels einer zweiten Sicherung, insbesondere mittels Splintsicherung, gegen ein unbeabsichtigtes Bewegens und/oder Verschwenkens des Sicherungselementes 77 aus der blockierenden Stellung gesichert sein.

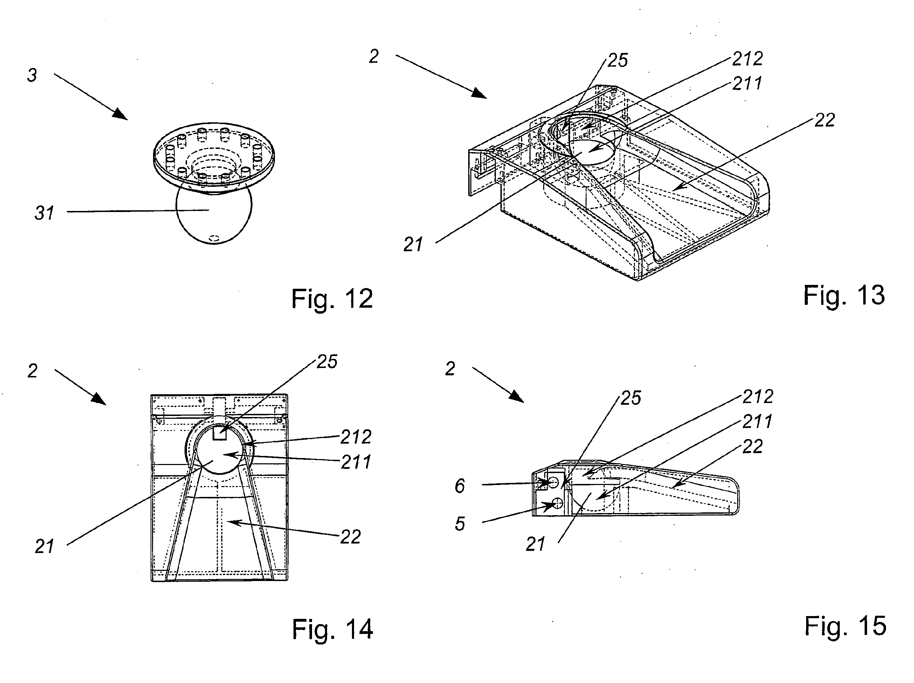

In Fig. 12 ist das Eingriffselement 3 der ersten Ausführungsform der Sattelkupplung 1 dargestellt, welches die Kupplungskugel 31 umfasst.

Fig. 13 bis 15 zeigen unterschiedliche Ansichten der Sattelplatte 2 der ersten Ausführungsform der Sattelkupplung 1, wobei insbesondere die Ausnehmung 25 zur Aufnahme des von der Sattelplatte 2 umfassten Niederhalterelementes 23 in diesen Figuren erkennbar ist.

In vorteilhafter Weiterbildung - insbesondere der ersten Ausführungsform der Sattelkupplung 1 - kann vorgesehen sein, dass die Sattelkupplung 1 Mittel zum Auslösen bei einem vorbestimmten Kippwinkel zwischen Sattelzugmaschine und Sattelanhänger aufweist. Mit derartigen Mittel kann gewährleistet werden, dass wenn entweder Sattelzugmaschine oder Sattelanhänger seitlich umkippen, die Sattelkupplung 1 lösend auslöst und damit der Sattelanhänger bzw. die Sattelzugmaschine nicht mit umkippen. Dieses Mittel zum Auslösen kann dabei als Auslösemittel bezeichnet werden und kann insbesondere als Kunststoffeinsatz, insbesondere als Gummieinsatz, Duroplasteinsatz und/oder Thermoplasteinsatz, in der Kugelpfanne 21 und/oder am Niederhalterelement 23 ausgebildet sein. Vorteilhafterweise kann dabei der Kunststoffeinsatz vorbestimmbar derart verformen und/oder brechen, dass die Kupplungskugel 31 trotz Haltestellung 231 des Niederhalterelementes 23 aus der Sattelplatte 2 entfernbar ist. Beispielsweise kann dabei - wenn der Sattelanhänger einen Abhang hinabstürzt - ermöglicht sein, dass die Sattelzugmaschine nicht von Sattelanhänger mithinabgezogen wird. Derart können schwere Unfälle verhindert werden und Personen geschützt werden, da hierbei im Fall eines Unfalles Sattelzugmaschine und Sattelanhänger üblicherweise voneinander getrennt werden.

Insbesondere kann vorgesehen sein, dass - in Einbaustellung gesehen - der erste Lagerpunkt 5 und/oder der zweite Lagerpunkt 6 unterhalb des Mittelpunktes einer in der Kugelpfanne 21 eingeschriebenen Kugel liegen. Bei der ersten Ausführungsform der Sattelkupplung 1 ist dabei vorgesehen, dass der erste Lagerpunkt 5 deutlich unterhalb des Mittelpunktes dieser eingeschriebenen Kugel liegt und dass der zweite Lagerpunkt 6 in etwa auf gleicher Höhe wie der Mittelpunkt dieser eingeschriebenen Kugel liegt. Diese Vorteilhafte Anordnung kann eine zusätzlich Notfallabsicherung mit sich bringen: Dabei kann - im Notfall, also bei überdurchschnittlicher Kraftbelastung - der zweite Lagerpunkt 6 einen Drehpunkt zum Drehen des Niederhalterelementes 23 ausbilden, sofern der erste Lagerpunkt 5 das Niederhalterelement 23 zumindest teilweise freigibt. Dazu kann der erste Lagerpunkt 5 beispielsweise das hochdeformierbare Gummielement und/oder eine Sollbruchstelle aufweisen, welche Sollbruchstelle im Bolzen und/oder im Kunststoffeinsatz vorgesehen sein kann. Anschließend kann das Niederhalterelement 23 um den zweiten Lagerpunkt 6 drehen. Wenn der zweite Lagerpunkt 6 unterhalb des Mittelpunktes der eingeschriebenen Kugel liegt, dann kann das Niederhalterelement 23 beim Herausziehen der Kupplungskugel 31 aus der Kugelpfanne 21 von der Kugel wegschwenken und das Herausziehen erleichtern. Derart kann die Kupplungskugel 31 mit vorbestimmbarer Kraft aus der Kugelpfanne 21 gezogen werden, womit die Notfallabsicherung gewährleistet sein kann.

Weitere erfindungsgemäße Ausführungsformen weisen lediglich einen Teil der beschriebenen Merkmale auf, wobei jede Merkrnalskombination, insbesondere auch von verschiedenen beschriebenen Ausführungsformen, vorgesehen sein kann.

## Patentansprüche

1. Sattelkupplung (1) zur Kupplung einer Sattelzugmaschine mit einem Sattelanhänger,
mit einer Sattelplatte (2) zur Montage an der Sattelaugnaaschine und einem Eingriffselement (3) zur Montage an dem Sattelanhänger, wobei die Sattelplatte (2) zur Aufnahme des Eingriffselementes (3) ausgebildet ist, wobei das Eingriffselement (3) eine Kupplungskugel (31) umfasst, wobei die Sattelplatte (2) eine Kugelpfanne (21) aufweist, wobei die Sattelplatte (2) ein Niederhalterelement (23) umfasst, wobei das Niedcrhalterelement (23) von einer Freigabestellung (230) in eine Haltestellung (231) bewegbar ist, und wobei das Niederhalterelement (23) einen Kontaktbereich (232) zum Kontaktieren einer in der Haltestellung (231) in der Kugelpfanne (21) angeordneten Kupplungskugel (31) umfasst, wobei eine Betätigungseinrichtung (7) zur Betätigung des Fixierelementes (4) vorgesehen ist **dadurch gekennzeichet,** dass die Betätigungseinrichtung (7) in einer Fixierstellung (71), einer Lösestellung (72) und einer Bereitschaftsstellung (73) anordenbar ist, und dass eine Vorrichtung (8) zur Verbringung der Betätigungseinrichtung (7) von der Lösestellung (72) in die Bereitschaftsstellung (73) bei einer Verbringung des Niederhalterelementes (23) von der die Haltestellung (231) in die Freigabestellung (230) vorgesehen ist.

2. Sattelkupplung nach Anspruch 1, **dadurch gekennzeichnet, dass** angrezend an die Kugelpfanne (21) eine Gleitführung (22) zur Fübrung der Kupplungskugel (31) zu der Kugelpfanne (21) angeordnet ist.

3. Sattelkupplung nach Anspruch 1 oder 2, **dadurch gekennzeichnet, dass** die Kugelpfanne (21) im Wesentlichen halbkugelförmig ausgebildet ist.

4. Sattelkupplung nach Anspruch 3, **dadurch gekennzeichnet, dass** die Kugelpfanne (21) einen an den halbkugelförmigen Bereich (211) anschließenden zylindrischen Bereich (212) aufweist.

5. Sattelkupplung nach einem der Ansprüche 1 bis 4, **dadurch gekennzeichnet, dass** das Niederhalterelement (23) um einen ersten Lagerpunkt (5) drehbar gelagert ist und in der Haltestellung (231) mittels eines Fixierelementes (4) in einem zweiten Lagerpunkt (6) fixierbar ist.

6. Sattelkupplung nach einem der Ansprüche 1 bis 5, **dadurch gekennzeichnet, dass** der Kontaktbereich (232) im Wesentlichen sichelförmig ausgebildet ist und in der Haltestellung (231) bereichsweise im halbkugelförmigen Bereich der Kugelpfanne (21) angeordnet ist.

7. Sattelkupplung nach Anspruch 5 oder 6, **dadurch gekennzeichnet, dass** in Einbaustellung gesehen - der erste Lagerpunkt (5) und/oder der zweite Lagerpunkt (6) unterhalb des Mittelpunktes einer in der Kugelpfanne (21) eingeschriebenen Kugel liegen.

8. Sattelkupplung nach einem der Ansprüche 5 bis 7, **dadurch gekennzeichnet, dass** im Bereich des ersten Lagerpunktes (5) ein Deformationselement angeordnet ist.

9. Sattelkupplung nach Anspruch 8, **dadurch gekennzeichnet, dass** das Deformationselement als elastischer Ring ausgebildet ist.

10. Sattelkupplung nach einem der Ansprüche 1 bis 9, **dadurch gekennzeichnet, dass** die Betätigungseinrichtung (7) einen Handhebel (74) umfasst.

11. Sattelkupplung nach einem der Ansprüche 1 bis 9, **dadurch gekennzeichnet, dass** die Beta̅tigungseinrichtung (7) wenigstens ein Fluidelement, insbesondere einen Hydraulikzylinder und/oder einen Pneumatikzylinder, umfasst.

## Claims

1. A fifth wheel coupling (1) for coupling a semitrailer tractor to a semitrailer, comprising a fifth wheel plate (2) for mounting on the semitrailer tractor and an engagement element (3) for mounting on the semitrailer, with the fifth wheel plate (2) being arranged for receiving the engagement element (3), with the engagement element (3) comprising a coupling ball (31), with the fifth wheel plate (2) comprising a ball socket (21), with the fifth wheel plate (2) comprising a retaining element (23), with the retaining element (23) being movable from a release position (230) to a holding position (231), and with the retaining element (23) having a contact region (232) for making contact with a coupling ball (31) arranged in the ball socket (21) in the holding position (231), with an actuating device (7) for actuating the fixing element (4) being provided, **characterized in that** the actuating device (7) can be arranged in a fixing position (71), a release position (72) and a readiness position (73), and that an apparatus (8) is provided for displacing the actuating device (7) from the release position (72) to the readiness position (73) during a displacement of the retaining element (23) from the holding position (231) to the release position (230).

2. A fifth wheel coupling according to claim 1, **characterized in that** a sliding guide (22) for guiding the coupling ball (31) to the ball socket (21) is arranged adjacent to the ball socket (21).

3. A fifth wheel coupling according to claim 1 or 2, **characterized in that** the ball socket (21) is arranged in a substantially semi-spherical way.

4. A fifth wheel coupling according to claim 3, **characterized in that** the ball socket (21) comprises a cylindrical region (212) which is adjacent to the semi-spherical region (211).

5. A fifth wheel coupling according to one of the claims 1 to 4, **characterized in that** the retaining element (23) is rotatably mounted about a first bearing point (5) and is fixable in the holding position (231) by means of a fixing element (4) in a second bearing point (6).

6. A fifth wheel coupling according to one of the claims 1 to 5, **characterized in that** the contact region (232) is substantially formed in the shape of a crescent, and is arranged in the holding position (231) in part in the semi-spherical region of the ball socket (21).

7. A fifth wheel coupling according to claim 5 or 6, **characterized in that** when seen in the installation position the first bearing point (5) and/or the second bearing point (6) are situated beneath the central point of a ball written into the ball socket (21).

8. A fifth wheel coupling according to one of the claims 5 to 7, **characterized in that** a deformation element is arranged in the region of the first bearing point (5).

9. A fifth wheel coupling according to claim 8, **characterized in that** the deformation element is arranged as an elastic ring.

10. A fifth wheel coupling according to one of the claims 1 to 9, **characterized in that** the actuating device (7) comprises a hand lever (74).

11. A fifth wheel coupling according to one of the claims 1 to 9, **characterized in that** the actuating device (7) comprises at least one fluid element, especially a hydraulic cylinder and/or a pneumatic cylinder.

## Revendications

1. Attelage à sellette (1) pour l'attelage d'un tracteur routier avec une semi-remorque, avec une plaque de sellette (2) destinée à se monter sur le tracteur routier et avec un élément de prise (3) destiné à se monter sur la semi-remorque, dans lequel la plaque de sellette (2) est conçue pour recevoir l'élément de prise (3), lequel élément de prise (3) comprend une boule d'attelage (31), la plaque de sellette (2) présentant une cuvette à rotule (21), la plaque de sellette (2) comprenant un élément de maintien (23), l'élément de maintien (23) pouvant être déplacé d'une position de libération (230) à une position de maintien (231) et l'élément de maintien (23) présentant une partie de contact (232) destinée à venir en contact avec une boule d'attelage (31) disposée dans la cuvette à rotule (21) dans la position de maintien (231), un dispositif d'actionnement (7) étant prévu pour actionner l'élément de fixation (4), **caractérisé en ce que** le dispositif d'actionnement (7) peut être disposé dans une position de fixation (71), une position de desserrage (72) et une position de disponibilité (73) et **en ce qu'**un dispositif (8) est prévu pour amener le dispositif d'actionnement (7) de la position de desserrage (72) à la position de disponibilité (73) quand l'élément de maintien (23) est amené de la position de maintien (231) à la position de libération (230).

2. Attelage à sellette selon la revendication 1, **caractérisé en ce qu'**est prévu un guidage coulissant (22) contigu de la cuvette à rotule (21) pour guider la boule d'attelage (31) vers la cuvette à rotule (21).

3. Attelage à sellette selon la revendication 1 ou 2, **caractérisé en ce que** la cuvette à rotule (21) est pour l'essentiel de forme hémisphérique.

4. Attelage à sellette selon la revendication 3, **caractérisé en ce que** la cuvette à rotule (21) présente une partie cylindrique (212) faisant suite à la partie hémisphérique (211).

5. Attelage à sellette selon l'une des revendications 1 à 4, **caractérisé en ce que** l'élément de maintien (23) est supporté avec possibilité de rotation autour d'un premier point d'appui (5) et peut être fixé au moyen d'un élément de fixation (4) dans un deuxième point d'appui (6) dans la position de maintien (231).

6. Attelage à sellette selon l'une des revendications 1 à 5, **caractérisé en ce que** la partie de contact (232) est sensiblement en forme de faucille et est disposée en partie dans la partie hémisphérique de la cuvette à rotule (21) dans la position de maintien (231).

7. Attelage à sellette selon la revendication 5 ou 6, **caractérisé en ce que**, vu dans la position de montage, le premier point d'appui (5) et/ou le deuxième point d'appui (6) se trouvent en dessous du centre d'une sphère inscrite dans la cuvette à rotule (21).

8. Attelage à sellette selon l'une des revendications 5 à 7, **caractérisé en ce qu'**un élément déformable est disposé au niveau du premier point d'appui (5).

9. Attelage à sellette selon la revendication 8, **caractérisé en ce que** l'élément déformable est réalisé comme un anneau élastique.

10. Attelage à sellette selon l'une des revendications 1 à 9, **caractérisé en ce que** le dispositif d'actionnement (7) comprend un levier à main (74).

11. Attelage à sellette selon l'une des revendications 1 à 9, **caractérisé en ce que** le dispositif d'actionnement (7) comprend au moins un élément à fluide, en particulier un vérin hydraulique et/ou un vérin pneumatique.
